Europäisches Patentamt

European Patent Office

Office européen des brevets

(19)

(11) Publication number: **0 153 524**

**A1**

(12) # EUROPEAN PATENT APPLICATION

(21) Application number: **84304150.0**

(22) Date of filing: **19.06.84**

(51) Int. Cl.⁴: **G 11 B 21/10**

(30) Priority: **02.03.84 US 585829**

(43) Date of publication of application:
**04.09.85 Bulletin 85/36**

(84) Designated Contracting States:
**BE DE FR GB IT NL SE**

(71) Applicant: **DYMEK CORPORATION**
**1851 Zanker Road**
**San José California 95112(US)**

(72) Inventor: **Young, Ronald E.**
**16281 Azalea Way**
**Los Gatos California 95030(US)**

(72) Inventor: **Meulners, Duane C.**
**1033 Woodview Place**
**San Jose California 95120(US)**

(74) Representative: **Hayward, Denis Edward Peter et al,**
**Lloyd Wise, Tregear & Co. Norman House 105-109 Strand**
**London WC2R OAE(GB)**

(54) **Diagnostic record.**

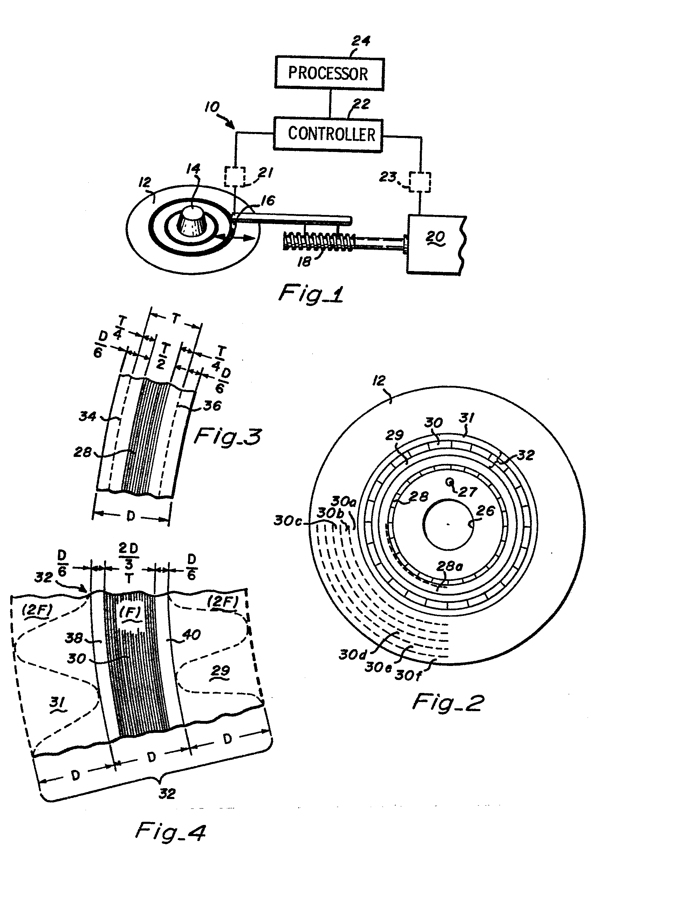

(57) A magnetic disk for a computer disk drive system is recorded in the format appropriate to the system with at least two special tracks. The first track (Figure 3) has known data recorded therealong but to a narrowe width (T/2) than the normal track width (T) for the format. Upon reading data from the track (28) the signal obtained is little dependent on head alignment and a poor signal-to-noise ratio can be assessed as being due to deficiency elsewhere in the system. The second track (30- Figure 4) has known data recorded therealong and is flanked on each side by a track (29:31) containing an interference signal content and spaced from the second track by a void space (38:40). The combination provides a test band so that upon reading the second track (30), the signal-to-noise ratio between the data signal and the interference signal is a function of head alignment. In each case signal-to-noise is measured in terms of the error rate between the data read and the known data recorded. Further first tracks may be provided of differing widths to provide differing read signal amplitudes for signal-to-noise ratio assessment. Further test bands may be provided with differing void space widths to provide assessment for differing degrees of head misalignment.

Fig-3

Fig-4

Title: Diagnostic Record

This invention relates generally to a diagnostic record that is usable within the data storage means of a computer system to enable certain performance parameters of the storage means and/or the system as a whole to be assessed.   The invention also relates to methods of testing performance using such a record.

A particular concern of the invention is a diagnostic record that is readable by a computer sysem with the aid of its data storage means, e.g. a disk drive, for enabling a user without special knowledge, software, or equipment to check, isolate and identify certain hardware malfunctions within the system.   The following discussion of prior proposals and the subsequent description of the practice of the invention will assume that magnetic disk data storage is employed in the computer system.

The placing of data on a magnetic disk is done according to a prescribed format.   The concentric data tracks on the disk will be assumed to have a spacing D between track centres.   The data is not recorded across the full width of the track space but across a centrally located width T which is typically two thirds of D and which corresponds to the width acted on by the write/read head in the system in question.   Thus each track may be regarded as a central data portion of width T flanked by two empty space portions of a width equal to one-sixth of D.   The spacing D may be referred to as the normal track space;   the width T as the normal track width.

When using a computer system, and a failure to properly read a specific piece of data occurs, several questions are raised. One question is whether or not the signal-to-noise quality of the system is satisfactory.   Another question is whether or not the read head is in proper alignment with the centre-line of the track which it is reading.   To answer these questions, skilled service has been required.   To determine disk drive alignment, current practice requires removal of the drive from the disk system by a skilled serviceman, who connects the drive to an exerciser, inserts an alignment disk, and with an oscilloscope interprets the pattern to determine if the drive alignment is satisfactory for the purpose intended.   This requires several hours of down time for the system and the services of a skilled technician with proper equipment.

Disks for aligning disk drives with an oscilloscope are well known. A flexible magnetic disk with signals varying on either side of a track centreline is disclosed in U.S. Patent No. 4,084,201 to Hack, et al. These signals are read and interpreted with the aid of an oscilloscope to check and make track adjustment, ascertain disk eccentricity and spindle eccentricity, check functioning of a magnetic head, and adjust the azimuth angle of the head. U.S. Patent No. 3,593,331 to Connell, et al., discloses an alignment disk with a three-track arrangement that provides a group of signals which may be read with a plurality of read/write heads and interpreted with the aid of an oscilloscope to produce an electrical function representative of disk alignment.

Automatic control systems for maintaining alignment of transducers are disclosed in U.S. Patent No. 4,068,267 to Inouye; U.S. Patent No. 4,149,200 to Card; U.S. Patent No. 4,157,576 to Hack; U.S. Patent No. 4,190,859 to Kinjo; and U.S. Patent No. 4,213,148 to Clemens. U.S. Patent No. 4,223,187 to Yonezawa, et al., discloses obtaining an alignment signal by analyzing signal variations caused by known undulations in the recording track.

Reference may also be made to U.S. Patents 3,508,231; 3,593,331; 4,084,201; 4,068,267; U.K. Patent 1,395,471; U.S.S.R. Patents 494,765 and 583,471; and Japanese Patent Publication 56-68940.

Attempts have been made to write a disk in machine-readable code in an off-track manner. These attempts were based on an assumption that if the drive in question could read a track offset in either direction from a correct track centreline position by one-half track width, the head alignment must be satisfactory. This assumption is erroneous. A signal degrades but 50 percent of the signal level for a one-half track width offset condition, and most disk drives will produce error-free signals well beyond this offset because the 50 percent signal level due to off-track conditions is basic to design in this type of device. Thus, such disks with off-track data will be read with failure points determined only by indeterminate system noise.

The present invention is founded on the concept of providing a diagnostic record which enables a signal-to-noise performance test to be made on a data storage system or on a computer system in which it is incorporated together with a test to determine whether the alignment of a read head, which may be a read/write head, is within allowable tolerances within the format of the data storage system in question.

The invention is not only concerned with providing a diagnostic record for such purposes but with a method of testing the signal-to-noise performance of a data storage system or of a computer using the data storage system and a method of testing the alignment of the read head of a data storage system, each method utilising a diagnostic record that is in accord with the invention.

According to the invention there is provided a diagnostic record for use in checking the performance of a data storage system which in normal use cooperates with a record on which data is stored in at least one data track according to a predetermined format, the diagnostic record comprising

a first recorded track which has a predetermined signal recorded therealong and the width of which is less than the width acted upon by the read head whereby the signal amplitude obtained from the read head is less than that obtainable from a track of the width acted upon by the read head and is substantially unaffected by misalignment of the read head space centre-line of the track; and/or

a second recorded track which has a predetermined signal recorded therealong to at least one side of which is a parallel track having interference content recorded therealong, and abutting said second track or spaced therefrom by a space that is unrecorded, whereby the signal-to-noise ratio of the predetermined signal to the interference signal obtained from the read head is a function of the alignment of the read head with the second track.

The diagnostic record to be described comprises a magnetic recording medium. It preferably has two such interference tracks either both abutting the second track or equally spaced therefrom.

The first and second track may be parallel such as will be found when the diagnostic record is in the form of a disk on which the first and second tracks are concentric.   In this case the first track is preferably radially inward of the second, and is still more preferably at the innermost track position provided by the format of the data storage system with which the diagnostic record is to be used, i.e. a format providing a succession of concentric data track positions.   The second track is preferably placed at an approximately mid-radius position of the disk.

Where as already indicated, the data storage system format provides for a normal track spacing D and a normal data track width T, preferably the first track has a width less than T.   If T equates with the read head width, this condition follows.   The first track is preferably produced by recording over the normal width T and then erasing edge portions.   These are made equal in width to maintain the alignment of the track centre-line.   The preferred narrowed track width is T/2 though as discussed hereinafter various widths are employed where more than one such first track is used.

The second track is in practice preferably spaced from the two (in the preferred case) interference tracks flanking it. It has a width not greater than T, that is it may be narrowed as the first track, and is spaced from each interference track by a distance not less than D/6.   These figures are based on the assumption that T is about 2D/3.   The predetermined signal with which the second track is recorded preferably has a specific frequency which will be denoted F and the or each interference track is recorded with a continuous wave signal at a frequency different from F, and more particularly at an integral multiple of F.   The multiple to be specifically described is two (2).

The diagnostic record may contain at least one further first track similar to that already mentioned in having a width less than that acted upon by the read head.   Each first track provides an equivalent function.   By giving the first tracks different widths to provide different output signal levels from the read head, testing may be performed at different signal-to-noise ratios and by grading the first tracks the signal-to-noise quality for the data storage system or overall computer system can be determined by the narrowest data track from which a usable signal is obtainable.    The determination of the usable signal is discussed below in relation to the preferred form of first track.

The diagnostic record may contain at least one further second track similar to that already mentioned in having to at least one side thereof, and preferably at each side, a parallel track having an interference content recorded therealong and abutting the further second track or spaced therefrom by a space that is unrecorded, i.e. void.    The second tracks differ by virtue of differing track widths and/or different width of spacing from the associated parallel interference tracks.    Differing spacings for a series of second tracks can be used to represent different design tolerances to determine quantitatively the off-track error head alignment.

The predetermined signal recorded on the or each first track is preferably a data signal of known content, e.g. a known bit pattern of 1's and 0's..    With such a record the invention provides a method of testing the signal-to-noise performance of a data storage system or of a computer system using the data storage system, which method comprises the steps of loading such a diagnostic record formatted with reference to the format required by the data storage system, reading data from the or a selected first data track (where more than one such track is provided), and measuring the error rate of the read data referred to the known data on the first track in question as a measure of signal-to-noise ratio.

The invention also provides a method of testing the alignment of a read head of a data storage system, comprising the steps of loading a diagnostic record in accord with the invention and formatted with reference to the format required by the data storage system, reading the signal from the or a selected second track (as the case may be), and obtaining a measure of the signal-to-noise ratio of the signal read from the or, the selected, second track referred to the interference content signal from an associated interference track.   The signal-to-noise ratio of the read signal is thus a function of the alignment of the head with the second track.   To this end, it is preferred to have this measure made in terms of a data error rate.   The or each of the second tracks has a predetermined data signal recorded therealong.   On reading the data the error rate of the read data, which is referred to the known data on the track, is a measure of signal-to-noise ratio and of alignment.

The measuring of error rate between one set of known data and the read set of data can be done by direct computer operations.

A diagnostic record in accordance with the present invention has the advantages of being applicable to a wide range of track densities, to all known formats, and to various recording media such as disks, diskettes, tapes, cassettes and drums.

It will be appreciated that in determining design parameters for a given diagnostic record suitable for a given storage system regard will be had to commonly accepted values for design tolerance within the system for off-track error.

The present invention and its practice will now be further described with reference to the accompanying drawings in which:

Fig. 1 is a diagrammatic view of a computer system including a disk drive having mounted therein a diagnostic record in accordance with the present invention;

Fig. 2 is an enlarged plan view of the diagnostic record shown in Fig. 1;

Fig. 3 is an enlarged plan view of a narrowed data track portion of the diagnostic record shown in Fig. 2;

Fig. 4 is a detail view of an alignment test band portion of the diagnostic record shown in Fig. 2;

Fig. 5 is a graph illustrating the relationship of signal loss to off-track position for the narrowed data track;

Fig. 6 is a graph illustrating the relationship of interference signal level to off-track position for the alignment test band;

Fig. 7 is a graph illustrating the relationship of error rate to off-track position for the alignment test band, the error being shown in a one bit per value of the ordinate;

Fig. 8 is a graph illustrating the relationship of signal-to-noise ratio to off-track position for the alignment test band; and

Fig. 9 is a graph illustrating composite performance which results in the relationship of a measured error rate to off-track position.

Fig. 1 illustrates a computer system, identified by general reference number 10, having inserted therein a diagnostic record 12. The record 12 is readable by the system 10 and enables a user without special knowledge, software, or equipment to check, isolate and identify hardware malfunctions within the system. For purposes of illustration, the computer system 10 is shown as a typical disk system, and the record 12 is represented in the form of a diskette. The record 12 is mounted for rotation on a spindle/hub 14. A read/write head 16 typically is movable radially over the record by a mechanism such as a lead screw 18 that is turned by a stepping motor 20. The read/write head 16 is connected through an interface circuit 21 to a controller 22. The controller 22 is connected to the stepping motor 20 through an interface circuit 23. The controller 22 is also connected to a processor 24.

Fig. 2 shows the basic configuration of the record 12. A hole 26 is provided at the center of the record for receiving the spindle/hub 14. An index hole 27 provides an index reference to assure that the record content is in the same relative angular position to the read/write head 16 from disk to disk. A narrowed data track 28 is located at the inside radius on the record 12 for the most stringent signal-to-noise test. A data track 30 of predetermined normal width and a pair of adjacent interference tracks 29 and 31 form a test band 32 for checking alignment of the read/write head 16 by direct operation of the computer system 10. Preferably, the test band is located at the radial center of the recording. Both data tracks 28 and 30 comprise a continuous string of sectors, and each sector contains a group of bytes comprising one record of data. Numerous concentric circular tracks can be provided on the recording surface.

With reference to Fig. 3, there is shown the narrowed data track 28 with a reduced signal output that is used for checking the signal-to-noise quality of the computer system 10. T represents the normal width of written data recorded by a recording head. D represents a normal track space width, which is also the distance between centerlines of adjacent tracks or the reciprocal of the number of tracks per inch. D/6 represents a space width equivalent to off-track error resulting from a common accepted value for design tolerance within the computer system 10. The narrowed data track is formed by recording data in any known format readable by the system over a normal track width T that is centered within the normal track space width D, and erasing portions T/4 along each side of the normal recorded track. This leaves a track of one-half the normal width, centered in the normal track space. A pair of adjacent spaces 34 and 36 remain within the normal track space abutting the narrowed data track and extend parallel to the track on opposite sides thereof. These adjacent void spaces have equal widths that equal the sum of T/4 and D/6.

Referring now to Fig. 4, there is shown the test band 32 for checking alignment of the read/write head 16 by direct operation of the computer system 10. The data track 30 has a normal track width T or 2/3 D that is centered within the normal track space width D. Encoded data is recorded thereon in machine-readable format, such as one of the standard sector codes of IBM Corporation, at a basic data recording frequency (F). A pair of adjacent spaces 38 and 40 having widths approximately D/6 remain within the normal track space and extend parallel to the track 30 on opposite sides thereof. The width of these spaces is determined from the computer system off-track design tolerance. Such tolerance occurs due to factors such as screw runout, eccentricity in the spindle mount, and disk expansion and contraction. The common accepted value for off-track design tolerance is D/6. The pair of adjacent interference tracks 29 and 31 have magnetic interference signals recorded thereon. These interference signals are continuous waves having a frequency (2F) that is twice the basic data recording frequency (F) of data track 30, to form noise walls on each side of the data track.

In operation, a user inserts the recording 12 into the computer system 10 and directs the system to read the narrowed data track 28. Since by virtue of the narrowed track the signal amplitude output for this track is reduced, the signal-to-noise relationship is more sensitive to internal noise within the system. The read/write head 16 having a width equal to the track width T picks up the same signal amplitude for up to a T/4 off-track location in either direction from the track centerline, and the signal-to-noise test would not be affected by such an off-track condition. If the computer cannot read the narrowed data track, the problem is internal noise within the system. If the computer system reads the narrowed data track without error, the signal-to-noise quality of the system is satisfactory, and the user proceeds to the next test.

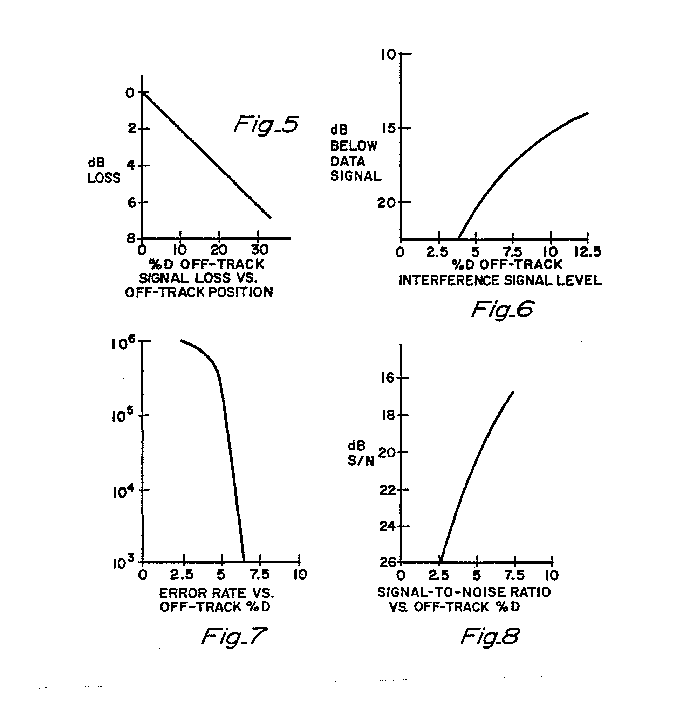

The user directs the computer system 10 to read data track 30 within test band 32 for checking head alignment by direct computer operation. Fig. 5 indicates the signal loss as head 16 moves from a track centerline position, indicated as 0% D, to an off-track condition, indicated as % D. If the head is off-track by a dimension equal to D/6, the width of adjacent spaces 38 and 40, then the % D is 16.7 and the signal loss is 3.47 dB. This slight signal loss has little affect upon the ability of the computer system to read the data track 30, because most drives will produce acceptable error performance as long as the recovered signal-to-noise ratio exceeds twenty dB. With the typical noise floor for drive electronics and disk noise at least thirty dB below the operating signal level, the twenty dB signal-to-noise point will not be reached until the recovered signal has been reduced by ten dB.

However, with the test band 32, as the misalignment of the head 16 increases from the track centre-line, the head 16 moves further over an interference track 29 or 31, and an interference signal is picked up in accordance with the graph of Fig. 6. In this graph, when the head is centred within the track space D for data track 30, the off-track offset is 0% D. As the head moves into an adjacent track space, the % D increases. When the interference amplitude increases with off-track position to a value of approximately twenty dB below data signal amplitude, the system will no longer achieve error free reading of the data track. In this case, the interference amplitude is about ten percent of the data signal amplitude. From this point, there is a rapid increase in the error rate with further off-track position, as can be seen by the graph of Fig. 7, wherein the error rate changes from better than one error in $0.5 \times 10^6$ bits to one error in $10^3$ bits in less than 1.3% D. This straight line slope has high sensitivity.

The signal-to-noise ratio versus off-track location graph of Fig. 8 shows a change from 26 dB below data signal at a location 2.5% D off-track to 21 dB at 4.8% D off-track. All systems tested achieved significant error counts between 18 dB S/N and 22 dB S/N. This total range of sensitivity is achieved with a position variation between 4.4 to 6.3% D off-track. The average failure point for first error detection (one error per sector in at least six sectors per track) is 21 dB corresponding to 4.8% D off-track.

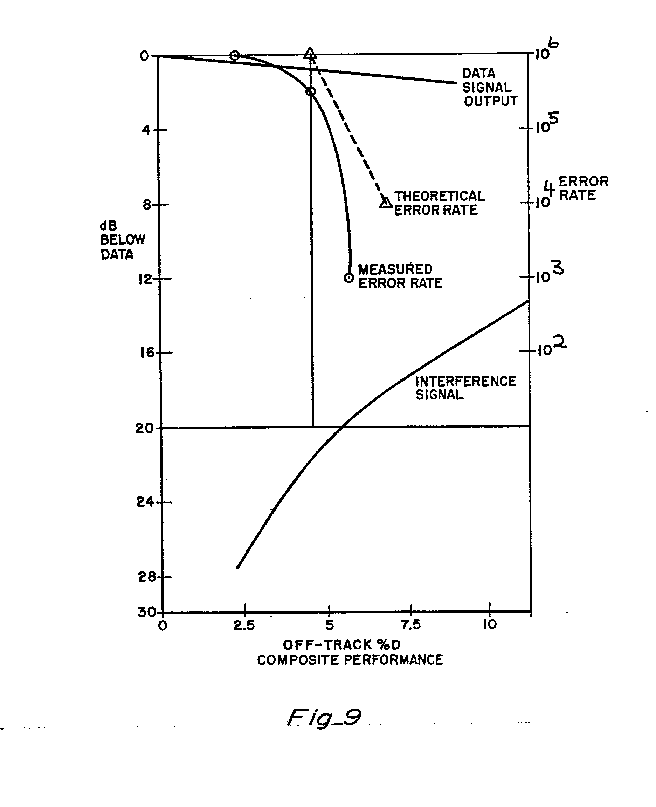

With reference to the composition performance graph of Fig. 9, accepted limits for the various parameters are shown. If the assumption is made that twenty dB signal-to-noise ratio is the value giving first errors, then the diagnostic test band 32 can be used to detect misalignments of 4.8% D off-track or a lesser percent. The error rate curve can be seen to support this contention as it moves from an error rate of one error in $0.5 \times 10^6$ bits to one error in $10^3$ bits in about 1.25%. D off-track differential.

If the computer system 10 reads the data track 30 within the test band 32 without errors, the head alignment is within the tolerance set for that system. If the diagnostic testing resulted from the system being unable to read data recorded by another computer system, then that interchanged data should be checked to see if it was recorded by a computer system compatible with computer system 10. If errors occur when computer system 10 reads data track 30, the system indicates that the read/write head 16 is not within the off-track alignment required. Service is then required to align the drive.

Fig. 2 also shows in dashed line a modified form of the invention. There are shown portions of a concentric track 28a and several tracks 30a-30f. These tracks can be on the same record 12 to allow assessment of varying degrees of signal-to-noise quality or off-track alignment. Some of such tracks such as 28a would be similar to the narrowed data track 28 with the track widths varied to change the signal output of the track for a quantified assessment of the failure signal-to-noise error. Other tracks would be similar to track 30 in test band 32, each being part of a like test band, but the adjacent spacings 38 and 40 would be varied to change the off-track alignment tolerance for the various bands.   By determining the minimum off-track alignment test band that the computer system 10 can read, the alignment error can be quantified.

Other evaluations can be made with the aid of the same record 12.   If some sectors of the data track 30 show errors while other sectors at angularly separated locations do not, then the possibilities of an eccentric recording spindle/hub 14 and off-centre clamping action of the collet assembly should be investigated.

It will be appreciated that the data or bit pattern recorded in the narrowed track or in the data track of the test band is a predetermined pattern so that on reading the track, the data read can be analysed or compared with the known data.   As described above, alignment can be checked when using the test band by measuring the error rate between the read data and the known data on the data track, and a likewise error rate can be used as a measure of signal-to-noise ratio when testing with the narrowed track.   In the test band for checking alignment there may be some advantage in narrowing the data track 30 (Fig. 2) to be less than the normal track width T with a corresponding increase in the width of the spaces 3 to 40 between it and the interference tracks 29, 31.

The diagnostic record above described has both the signal-to-noise test track or tracks 28 and the alignment test band or bands 32.   It is contemplated that a diagnostic record embodying the invention could have only one or other of these facilities, i.e. such facilities might be provided on separate records.

<u>Claims</u>

1.      A diagnostic record for use in checking the performance of a data storage system which in normal use cooperates with a record on which data is stored in at least one data track according to a predetermined format, the diagnostic record (12) comprising

a first recorded track (28) which has a predetermined signal recorded therealong and the width of which is less than the width acted upon by the read head (16) whereby the signal amplitude obtained from the read head (16) is less than that obtainable from a track of the width acted upon by the read head (16) and is substantially unaffected by misalignment of the read head (16) with the centre-line of the track; and/or

a second recorded track (3) which has a predetermined signal recorded therealong to at least one side of which is a parallel track (29:31) having interference content recorded therealong, and abutting said second track (30) or spaced therefrom by a space (38:40) that is unrecorded, whereby the signal-to-noise ratio of the predetermined signal to the interference signal obtained from the read head (16) is a function of the alignment of the read head (16) with the second track.

2.      A diagnostic record as claimed in Claim 1 having two interference tracks (29:31) either both abutting said second track or equally spaced therefrom.

3.      A diagnostic record as claimed in Claim 1 or 2 in which said first (28) and second (30) tracks are parallel to one another.

4.      A diagnostic record as claimed in Claim 3 which is in the form of a disk and on which said first (28) and second (30) tracks are concentric, the first track (28) being radially inward of the second track (30).

5.      A diagnostic record as claimed in Claim 4 for use with a data storage system in which said predetermined format provides for a succession of concentric data track positions, said diagnostic record having said first track (28) at the innermost track position (Fig. 2) provided by said format and said second track (30) at a mid-radius position of said dish.

6.    A diagnostic record as claimed in Claim 3, 4 or 5 for use in a  data storage system in which said format provides for a normal track spacing D and a normal data track width T (Fig. 3), and wherein said first track (28) has a track width less than T.

7.    A diagnostic record as claimed in Claim 6 in which said first track (28) has been produced by recording the pertaining predetermined signal at the normal track width T and then subsequently erasing edge portions (34:36) thereof to produce said first track (28).

8.    A diagnostic record as claimed in Claim 7 in which said first track width has a value of T/2.

9.    A diagnostic record as claimed in Claim 8 for use in a data storage system in which the normal track width T has a value about two-thirds of the normal track spacing D.

10.    A diagnostic record as claimed in Claim 6, 7 8 or 9 in which said second track (30) has a width not greater than T and the or each interference track (29:31) is spaced therefrom by a distance not less than D/6.

11.    A diagnostic record as claimed in any preceding claim in which the predetermined signal with which said second track (30) is recorded has a frequency F and the or each interference track (29:31) is recorded with a continuous wave signal at a frequency different from F.

12.    A diagnostic record as claimed in Claim 11 in which said continuous wave is recorded at a frequency that is an integral multiple of F.

13.    A diagnostic record as claimed in Claim 12 in which said multiple is two (2).

14.    A diagnostic record as claimed in any preceding claim comprising at least one further first track (28a) similar to the first-mentioned first track (28) in having a width which is less than the width acted upon by said read head (16), said first tracks (28: 28a) having different track widths to provide different output signal amplitudes when read by said read head (16).

15.     A diagnostic record as claimed in any one of Claims 1 to 13 comprising at least one further first track (28a) similar to the first-mentioned first track (28) in having a width that is less than the width acted upon by said read head (16), said first tracks (28: 28a) being recorded at different amplitudes to provide different signal amplitudes from the read head (16).

16.     A diagnostic record as claimed in any preceding claim comprising at least one further second track (30a-30f) similar to said second track (30) in having to at least one side thereof a parallel track (29:31) having an interference content recorded therealong and abutting said further second track or spaced therefrom by a space (38:40) that is unrecorded, and said second tracks (30a-30f) differing by virtue of having different track widths and/or different widths of spacing from the associated parallel interference tracks (29:31).

18.     A diagnostic record as claimed in any preceding claim in which said first track (28) or each of said first tracks (28: 28a) as the case may be has a predetermined data signal recorded therealong.

19.     A diagnostic record as claimed in any preceding claim in which said second track 30 or each of said second tracks (30:30a-f), as the case may be, has a predetermined data signal recorded therealong.

20.     A method of testing the signal-to-noise performance of a data storage system or of a computer system using the data storage system, comprising the steps of loading a diagnostic record (12) in accord with Claim 18 and formatted with reference to the format required by the data storage system, reading data from the or a selected first data track (28:28a) (as the case may be) of the diagnostic record (12), and measuring the error rate of the read data referred to the known data on the or the selected first data track (28:28a) as a measure of signal-to-noise ratio.

21.     A method of testing the alignment of a read head of a data storage system, comprising the steps of loading a diagnostic record (12) in accord with any one of Claims 1 to 19, and formatted

with reference to the format required by the data storage system, reading the signal from the or a selected second track (30:30a-f) (as the case may be), and obtaining a measure of the signal-to-noise ratio of the signal read from the, or the selected, second track (30:30a-f) referred to the interference content signal from an associated interference track (28:31).

    22.    A method as claimed in Claim 21 in which said diagnostic record is in accord with Claim 19 and said signal-to-noise ratio measure is obtained by a measure of the error rate of the data signal read from said second track (30:30a-f) referred to the known data recorded thereon.

Fig_1

Fig_3

Fig_2

Fig_4

Fig.5

SIGNAL LOSS VS.
OFF-TRACK POSITION

Fig.6

INTERFERENCE SIGNAL LEVEL

Fig.7

ERROR RATE VS.
OFF-TRACK %D

Fig.8

SIGNAL-TO-NOISE RATIO
VS. OFF-TRACK %D

Fig_9

## EUROPEAN SEARCH REPORT

**0153524**

. Application number

### DOCUMENTS CONSIDERED TO BE RELEVANT

EP 84304150.0

| Category | Citation of document with indication, where appropriate, of relevant passages | Relevant to claim | CLASSIFICATION OF THE APPLICATION (Int. Cl.4) |
|---|---|---|---|
| A | US - A - 4 271 442 (MIKAME)<br>* Abstract; fig. 5 *<br>-- | 1,3,4, 6,15 | G 11 B 21/10 |
| D,A | US - A - 4 157 576 (HACK)<br>* Fig. 1-11; abstract *<br>-- | 1 | |
| D,A | US - A - 4 068 267 (JNOUYE)<br>* Abstract; fig. 1-15 *<br>-- | 1 | |
| D,A | US - A - 4 149 200 (CARD)<br>* Abstract; fig. 1-15 *<br>-- | 1 | |
| D,A | US - A - 4 190 859 (KINJO)<br>* Abstract; fig. 1-11 *<br>---- | 1 | |

TECHNICAL FIELDS SEARCHED (Int. Cl.4)

H 04 N 5/00

G 11 B 5/00

G 11 B 21/00

The present search report has been drawn up for all claims

| Place of search | Date of completion of the search | Examiner |
|---|---|---|
| VIENNA | 19-02-1985 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82